# EUROPÄISCHE PATENTANMELDUNG

(11) **EP 3 764 185 A1**
(43) Veröffentlichungstag der Anmeldung: **13.01.2021**
(21) Anmeldenummer: 20181990.1
(22) Anmeldetag: 24.06.2020
(51) Int. Cl.: G05B 23/02, G05B 17/02, G06F 11/22, G06F 11/263

(54) **VERFAHREN ZUM TESTEN EINES SYSTEMS**

(30) Priorität: 12.07.2019 DE 102019210344
(71) Anmelder: Robert Bosch GmbH, 70442 Stuttgart (DE)
(72) Erfinder: Sarkic, Samir, 71638 Ludwigsburg (DE)

(57) **Zusammenfassung**

Vorgestellt wird ein computerimplementiertes Verfahren zum Testen eines Systems, insbesondere eines eingebetteten Systems. Dabei werden erste Fehler in das System eingebracht, ein Systemverhalten des Systems wird nach Einbringen der ersten Fehler beobachtet und daraufhin überprüft, ob ein erstes Fehlverhalten des Systems auftritt. Weiterhin wird von einem maschinellen Lernsystem abhängig von den ersten Fehlern und abhängig von dem Auftreten des ersten Fehlverhaltens eine Wahrscheinlichkeit für ein Auftreten eines Fehlverhaltens des Systems bei einem Einbringen von Fehlern in das System abhängig von Eigenschaften der eingebrachten Fehler gelernt. Abhängig von der gelernten Wahrscheinlichkeit werden zweite Fehler in das System eingebracht und das Systemverhalten des Systems nach Einbringen der zweiten Fehler wird beobachtet und daraufhin überprüft, ob ein zweites Fehlverhalten auftritt.

## Beschreibung

Die Erfindung betrifft computerimplementierte Verfahren zum Testen eines insbesondere eingebetteten Systems sowie ein dazu eingerichtetes Testsystem sowie dazu eingerichtete Computerprogramme.

### Stand der Technik

Die Entwicklung eines (funktional) sicheren Produkts erfordert verschiedene Sicherheitsanalysen wie FMEA (Failure Modes and Effect Analysis - Fehlermöglichkeits- und -einflussanalyse) oder FTA (Fault Tree Analysis - Fehlerbaumanalyse). Die Erfordernisse ergeben sich dabei aus Standards für die funktionale Sicherheit wie beispielsweise der ISO26262:2011.

Die Kernidee der verschiedenen Methoden zur Sicherheitsanalyse ist:
1. Definiere Arten von Fehlverhalten (failure modes) für das untersuchte System.
2. Analysiere, wie diese Art von Fehlverhalten propagiert, insbesondere andere Subsysteme beeinträchtigt, und welchen Einfluss sie auf das Gesamtsystem hat, insbesondere welche negative Auswirkung auf dessen funktionale Sicherheit.
3. Führe eine Kritikalitätsbewertung durch. Dabei ist ein Hauptaspekt die Untersuchung, ob bestimmte Arten von Fehlverhalten direkt zu Verstößen von Sicherheitsanforderungen führen können oder lediglich in Kombination mit dem Auftreten anderen Fehlverhaltens.
4. Verbessere das System. Für Arten von Fehlverhalten, welche direkt zu einem Verstoß von Sicherheitsanforderungen führen, werden typischerweise Maßnahmen eingeführt, welche das Fehlverhalten detektieren und das System in einen sicheren Zustand überführen können. Für Kombinationen aus Fehlern untersucht das Analyseteam die Kritikalität und definiert Maßnahmen, wenn erforderlich.

Das Vorgehen bei derartigen Sicherheitsanalysen ist häufig durch einen großen Anteil manueller bzw. vom Experten zu definierender Schritte gekennzeichnet, was bei komplexen System schnell zu einem hohen Aufwand und dem Risiko von Analysefehlern führen kann, insbesondere zu nicht detektierten Schwächen des Systems.

Mögliche Gründe hierfür sind:
1. Eine hohe Anzahl potentieller Arten von Fehlverhalten, Systemzustände, Betriebsszenarien und Fehlerkombinationen.
2. Schwierige Kapselung: Eine typische Maßnahme zum Umgang mit Komplexität ist eine Aufteilung aufwendiger Analyseaufgaben in kleinere Analysepakete für Subsysteme. Dies stellt sich aber in realistischen Umgebungen als schwierig dar, weil Fehlereffekte von der spezifischen Umgebung des jeweiligen Subsystems abhängen und es komplexe Beziehungen zwischen Subsystemen gibt, die Detail berücksichtigt werden müssten.

Es gibt Fortschritte im Bereich einer modellgetriebenen Sicherheitsanalyse, welche mit der Integration und Kapselung von Sicherheitsanalysen helfen werden. Aus der DE DE102018219852 ist beispielsweise ein Verfahren zum Zuweisen von Funktionen eines Funktionsmodells in einem verteilten System mit mehreren vernetzten Verarbeitungsknoten bekannt.

Modellgetriebene Methoden benötigen ausreichend detaillierte Modelle, die nur aufwendig bereitzustellen sind. Oftmals sind z.B. nötige Informationen über zugelieferte Software-, Hardware-, mechanischen oder hydraulischen Subsystemen nicht verfügbar.

Analysen mit vielen manuellen Schritten sind oft fehlerbehaftet und unvollständig. Mit modellgetriebenen Ansätzen allein werden die Anforderungen an Sicherheitsanalysen nur schwer zu erfüllen sein. Daher sind verbesserte Methoden wünschenswerte, um die Sicherheit komplexer Systeme sicherzustellen. Mit Methoden des sogenannten SBT (search based testing) können Tests für Systeme automatisch generiert werden. Siehe z.B. "Phil McMinn: Search-Based Software Testing: Past, Present and Future. In Proceedings of the 2011 IEEE Fourth International Conference on Software Testing, Verification and Validation Workshops (ICSTW '11). IEEE Computer Society, Washington, DC, USA, 153-163, 2011".

Mutationstestverfahren (Mutation testing) ermöglichen eine Überprüfung und Verbesserung der Testqualität. Siehe z.B. Y. "Jia and M. Harman: An Analysis and Survey of the Development of Mutation Testing. In IEEE Transactions on Software Engineering, Vol. 37, No. 5, pp. 649-678, Sept.-Oct. 2011." Die Kernidee von Mutationstestverfahren ist das Einbringen von Codeveränderungen (z.B. eine Änderung von + zu - in einer Codezeile) und Nutzung des veränderten Codes in einem Testfall. Wenn die Veränderungen detektiert werden, weist das darauf hin, dass die Tests Probleme im System finden können.

### Offenbarung der Erfindung

Fehlverhalten (englisch oft: failure) beschreibt im Folgenden ein unerwünschtes Verhalten des untersuchten Systems. Fehler (englisch oft: fault) beschreibt im Folgenden eine fehlerhafte Eigenschaft des Systems. Fehlerinjektion (fault injection) bezeichnet das gezielte Einbringen von Fehlern, also fehlerhaften Eigenschaften, in untersuchte System. Fehlerinjektion kann in Testverfahren eingesetzt werden, insbesondere um die Testabdeckung zu erhöhen. Eine Möglichkeit für Tests durch Fehlerinjektion ist durch Mutationstestverfahren (mutation testing) gegeben, bei welchem Teile von einem Softwarecode des Systems durch einen veränderten (mutierten) Softwarecode ausgetauscht werden.

Vorgestellt wird ein computerimplementiertes Verfahren zum Testen eines Systems, insbesondere eines eingebetteten Systems (embedded system). Ein eingebettetes System bezeichnet dabei einen elektronischen Rechner oder auch Computer, der in einen technischen Kontext eingebunden (eingebettet) ist. Dabei übernimmt der Rechner entweder Überwachungs-, Steuerungs- oder Regelfunktionen oder ist für eine Form der Daten- bzw. Signalverarbeitung zuständig, beispielsweise beim Ver- bzw. Entschlüsseln, Codieren bzw. Decodieren oder Filtern von Daten.

In dem Testverfahren werden erste Fehler in das System eingebracht, ein Systemverhalten des Systems nach Einbringen der ersten Fehler wird beobachtet und daraufhin überprüft, ob ein erstes Fehlverhalten des Systems auftritt. Die Überprüfung des Systemverhaltens erfolgt dabei vorzugsweise anhand mindestens einer vorbestimmten, maschinenlesbaren Sicherheitsanforderung und das Feststellen des Fehlverhaltens erfolgt, wenn das Systemverhalten die mindestens eine Sicherheitsanforderung nicht erfüllt.

Von einem maschinellen Lernsystem wird abhängig von den ersten Fehlern und abhängig von dem Auftreten des ersten Fehlverhaltens eine Wahrscheinlichkeit berechnet bzw. gelernt. Berechnet bzw. gelernt wird dabei eine Wahrscheinlichkeit für ein Auftreten eines Fehlverhaltens des Systems bei einem Einbringen von Fehlern mit bestimmten Eigenschaften. Abhängig von der gelernten Wahrscheinlichkeit werden zweite Fehler in das System eingebracht und das Systemverhalten des Systems nach Einbringen der zweiten Fehler wird beobachtet und daraufhin überprüft, ob ein zweites Fehlverhalten auftritt. Dabei umfasst das maschinelle Lernsystem vorzugsweise einen evolutionären Algorithmus, einen genetischen Algorithmus oder ein neuronales Netz.

Es wird also ein Lernverfahren eingesetzt, um die für einen Test an einem System einzubringenden Fehler gezielter auswählen bzw. generieren zu können. So kann insbesondere gelernt werden, welche Fehler (optional: in welchen Systemzuständen oder zu welchen Umgebungsbedingungen oder in welchen Kombinationen) vielversprechend dafür sind, bei einem Einbringen in das System ein Fehlerverhalten des Systems hervorzubringen und Sicherheitsrisiken identifizieren zu können, und welche nicht. Das entsprechende Testsystem selbst kann je nach zu testendem System als reine Softwarelösung implementiert sein oder auch Hardwareanteile umfassen, insbesondere um eine Fehlerinjektion nahe an einer zu testenden Hardware zur ermöglichen.

Neben einer verbesserten Testqualität ermöglichen die Verfahren eine hohe Testabdeckung bei vergleichsweise geringem Testaufwand (Rechenschritte, Zeitdauer, Speicherkapazität). Eine höhere Automatisierung von Testverfahren kann erreicht werden und die Sicherheit des untersuchten Systems kann zuverlässig überprüft und sichergestellt werden.

In bevorzugten Ausgestaltungen betreffen die Fehler einen zeitlichen Ablauf im System, insbesondere einen Zeitpunkt oder eine Wiederholrate für ein Signal, für einen Funktionsaufruf oder für eine Funktionsunterbrechung, oder die Fehler betreffen einen Wert im System, insbesondere eines Signals oder eines Parameters. Die Eigenschaften der eingebrachten Fehler umfassen vorzugsweise eine Stelle im System, an der die Fehler eingebracht werden, oder eine Art der eingebrachten Fehler, oder einen Wert oder eine Amplitude der eingebrachten Fehler oder eine Kombination der eingebrachten Fehler. Hierdurch wird eine flexible Fehlerinjektion ermöglicht sowie eine geeignete Parametrisierung des Lernverfahrens erreicht.

Vorzugsweise lernt das maschinelle Lernsystem die Wahrscheinlichkeit auch abhängig von einer Umgebungsbedingung, einem Systemzustand oder einem Betriebsmodus des Systems. Da für verschiedene Betriebsmodi, Umgebungsbedingungen oder Systemzustände unterschiedliche Sicherheitsanforderungen gelten können und bestimmte Fehler auch je nach Betriebsmodus, Umgebungsbedingung oder Systemzustand unterschiedliche Systemverhalten auslösen können, wird durch diese Berücksichtigung ein robusteres und effizienteres Lernen erreicht.

In bevorzugten Ausgestaltungen werden die Fehler mittels einer Software zur Fehlerinjektion oder mittels einer Hardware zur Fehlerinjektion in das System eingebracht. Besonders bevorzugt ist ein Einbringen über sogenannte Mutationen oder sogenannte Mutationstestverfahren (mutation testing), also insbesondere über eine Veränderung oder einen Austausch eines Teils eines Softwarecodes des Systems. Diese Art der Fehlereinbringung kann besonders effizient automatisiert werden und die Eigenschaften von entsprechenden Veränderungen oder eines entsprechenden Austauschs eignen sich besonders gut zum Anlernen mit einem maschinellen Lernverfahren.

Vorteilhafterweise ist das System mindestens teilweise ein physikalischer Prototyp, mindestens teilweise als Hardware-in-the-Loop realisiert ist, mindestens teilweise als Software-in-the-Loop realisiert ist und / oder mindestens teilweise als Prozessor-in-the-Loop realisiert ist. Eine Umgebung des Systems kann für das Testen simuliert werden. Vorzugsweise weist das System Hardwarekomponenten und Softwarekomponenten auf. In besonders bevorzugten Ausgestaltungen ist das System ein Steuersystem oder ein Regelsystem, insbesondere für eine elektrische, hydraulische oder pneumatische Vorrichtung, Maschine oder einen Aktor einer solchen Vorrichtung und / oder ist ein zur Regelung oder Steuerung einer Funktion eines Fahrzeugs oder eines Roboters eingerichtetes System. Insbesondere kann das System ein Fahrerassistenzsystem in einem Fahrzeug sein oder ein Steuer- oder Regelsystem, welches eine Fahrfunktion in einem hochautomatisierten oder autonomen Fahrzeug steuert oder regelt. Für derart komplexe Systeme sind die beschriebenen Verfahren besonders gut geeignet und liefern die größten Effizienzvorteile.

In besonders bevorzugten Ausgestaltungen werden in einer Schleife wiederholt weitere Fehler abhängig von einer bereits gelernten Wahrscheinlichkeit eingebracht. Abhängig von den eingebrachten weiteren Fehlern und von für diese festgestelltem Fehlverhalten erfolgt ein weiteres Lernen des maschinellen Lernsystems. Vorzugsweise wird abhängig von dem maschinellen Lernsystem oder von der gelernten Wahrscheinlichkeit ein Testendekriterium bestimmt wird oder das Verfahrens automatisch beendet. Insbesondere kann das Verfahren beendet werden, wenn die Wahrscheinlichkeit für das Auftreten weiteren Fehlverhaltens durch das Einbringen weitere Fehler eine bestimmte Schwelle nicht überschreitet. Somit kann ein umfassendes Testverfahren komplett automatisiert durchgeführt und gegebenenfalls beendet werden. Eine hohe Testabdeckung wird dadurch erreicht, dass durch das maschinelle Lernsystem vorrangig und ausschließlich Fehler oder Fehlerkombinationen eingebracht werden, für die mit erhöhter Wahrscheinlichkeit ein Fehlverhalten des Systems eintritt. Bleiben keine vielversprechenden Kombinationen mehr übrig, kann das Verfahren abgeschlossen werden.

In einer vorteilhaften Ausgestaltung wird das getestete System abhängig von Ergebnissen des Tests angepasst, insbesondere wird ein Übergang des Systems in einen sicheren Zustand für festgestellte Fehlverhalten sichergestellt.

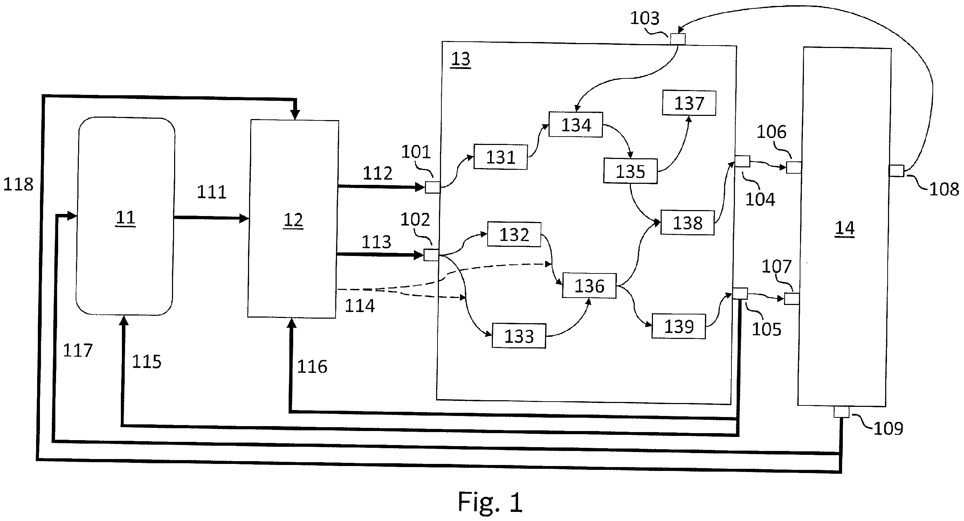

Nachfolgend werden Ausführungsformen der Erfindung unter Bezugnahme auf die beiliegende Zeichnung näher erläutert. Fig. 1 zeigt schematisch ein beispielhaftes Testszenario mit Testsystem und untersuchtem System.

### Beschreibung der Ausführungsbeispiele

Signifikante Verbesserungen in der Verfügbarkeit von performanten und erschwinglichen Testumgebungen (z.B. Hardware in the Loop, Software in the Loop, Processor in the Loop) ermöglichen es, Systeme oder Subsysteme eines Gesamtsystems in einer Simulation zu testen.

Um die Analyse eines komplexen Systems hinsichtlich funktionaler Sicherheit zu unterstützen, ist es möglich in solchen Testumgebungen Fehler einzubringen (Fehlerinjektion) und automatisch kritische Pfade in einem System zu detektieren. Das kann für spezifische Szenarien von Fehlverhalten erfolgten, um den Effekt bestimmten Fehlverhaltens zu untersuchen die Leistungsfähigkeit von Detektionsmechanismen zu überprüfen.

Hierbei ist der Aufwand solcher Fehlerinjektionsverfahren für komplexe Systeme allerdings regelmäßig hoch aufgrund manueller Schritte und langer Ausführungsdauern. Aufgrund der vielen möglichen Testfälle in solchen Systemen ist der Aufwand für Testdefinition, Testautomatisierung und Auswertung von Testergebnissen enorm und steigt in der Regel exponentiell mit der Anzahl. Das hängt auch damit zusammen, dass Fehler zu verschiedenen Betriebsbedingungen und in verschiedenen Betriebsmodi eingebracht werden können, dass oft Fehlerkombinationen untersucht werden sollten und dass es verschiedene Arten von Fehlverhalten gibt (zu hohe Wert, zu niedrige Werte, Oszillationen, transiente Fehler etc.).

In bestehenden Hardware-in-the-loop-Umgebungen wäre es daher nicht realistisch, eine komplette Testabdeckung zu erreichen. Auch bei einem Fokus auf reine Software-in-the-loop-Umgebungen und bei hoher Rechenleistung (z.B. mittels Cloud-Computing) bleibt die Komplexität für Testspezifikationen und Auswertung von Ergebnissen.
Vorgestellt wird daher ein Verfahren, dass es ermöglicht, die Anzahl der durchzuführenden Tests automatisch sinnvoll zu reduzieren und dabei insbesondere auf die kritischen Fälle bzw. Fehler oder Fehlerkombinationen zu fokussieren.

Figur 1 zeigt eine Testumgebung mit einem Testsystem 11, 12 sowie einem untersuchten bzw. zu testendem System 13. Eine Umgebung 14 des Systems 13 wird simuliert. Das zu testende System 13 kann als finales Produkt vorliegen, als prototypische Realisierung oder auch teilweise als Simulation realisiert sein, insbesondere als Hardware in the loop, Software in the loop, Prozessor in the loop oder Kombinationen hieraus.

Das Testsystem 11, 12 umfasst eine Komponente 11, welche ein computerimplementiertes Maschinenlernsystem umfasst sowie automatisiert Testfälle einschließlich einzubringenden Fehlern definieren bzw. generieren kann. Weiterhin umfasst das Testsystem 11, 12 eine Komponente 12, welche Testfälle einschließlich einzubringenden Fehlern in einem Schritt 111 empfangen kann. In Schritten 112 bzw. 113 speist die Testsystem-Komponente 12 Eingangsgrößen entsprechend einem Testfall über Schnittstellen 101 bzw. 102 des zu testenden Systems in dieses ein. Ebenso speist die Testsystem-Komponente 12 in einem Schritt 114 Fehler entsprechend dem empfangenen Testfall in das zu testende System ein.

Im zu testenden System 13 sind Pfade, z.B. Software- und / oder Funktionspfade gezeigt welche über die Eingangsschnittstellen 101, 102, 103 des zu testenden über Funktionsblöcke 131 bis 139 sowie zu den Ausgangsschnittstellen 104 und 105 des zu testenden Systems führen. In diesem Beispiel wird jeweils ein Fehler von Testsystem-Komponente 12 in Schritt 114 in die Pfade zwischen Eingangsschnittstelle 102 und Block 133 sowie zwischen den Blöcken 132 und 136 eingebracht.

Die Simulation der Umgebung 14 des Systems 13 empfängt an seinen Eingangsschnittstellen 106 und 107 über Ausgangsschnittstellen 104 und 105 des zu testenden Systems ausgegebene Größen. Die Simulation der Umgebung 14 gibt über seine Ausgangsschnittstelle 108 eine Ausgangsgröße aus, welche von dem zu testenden System 13 an seiner Eingangsschnittstelle 103 empfangen wird.

Auf diese Art kann das Systemverhalten des zu testenden Systems 13 im Fall einer speziellen (hier simulierten) Umgebung und für einen bestimmten von der Testsystem-Komponente 12 eingespeisten Testfall überprüft werden. Insbesondere kann überprüft werden, ob es für diesen Testfall einschließlich der entsprechend eingebrachten Fehler zu einem Fehlverhalten des getesteten Systems 13 kommt.

Zur Überprüfung können die Testsystem-Komponenten 11 bzw. 12 in den Schritten 115 bzw. 116 von dem zu testenden System 13 über dessen Ausgangsschnittstelle 105 ausgegebene Größen empfangen und in den Schritten 117 bzw. 118 von der Simulation der Umgebung 14 über deren Ausgangsschnittstelle 109 ausgegebene Größen empfangen.

Von dem Testsystem 11, 12 werden die Fehler dabei insbesondere unter verschiedenen Umgebungsbedingungen der Umgebung 14 und für verschiedene Betriebszustände bzw. Betriebsmodi des zu testenden Systems 13 eingebracht. Das Testsystem 11, 12 analysiert das Ergebnis des Tests insbesondere bezüglich seiner Auswirkung auf eine funktionale Sicherheit des Systems 13, insbesondere wird überprüft, ob vorbestimmte Sicherheitsanforderungen durch das System 13 eingehalten werden oder ob das System 13 diesbezüglich ein Fehlverhalten aufweist.

Abhängig von der Überprüfung und den eingebrachten Fehlern lernt ein Maschinenlernsystem des Testsystems 11, 12, welche Fehler, welche Fehlerkombinationen, welche Fehlereigenschaften oder welche Kombinationen von Fehlereigenschaften vielversprechend dafür sind, zu einem Fehlverhalten des Systems zu führen. Beispielsweise kann in einem Lernsystem eine Belohnung (reward) für Fehlern, Fehlerkombinationen, Fehlereigenschaften oder Kombinationen von Fehlereigenschaften zugeteilt werden, wenn diese zu einer erhöhten Abweichung von Sicherheitsanforderungen führen. Vorzugsweise werden Wahrscheinlichkeiten für Fehler, Fehlerkombinationen, Fehlereigenschaften oder Kombinationen von Fehlereigenschaften gelernt. Auch berücksichtigt werden für das Lernverfahren und die Fehlerauswahl oder Fehlergenerierung können Umgebungsbedingungen, Systemzustand oder Betriebsmodus des Systems 13.

Abhängig von den gelernten Wahrscheinlichkeiten des oder der vorangegangenen Fehlerinjektionen und Testauswertungen wird der nächsten Testdurchlauf bestimmt oder angepasst. Das erfolgt vorzugsweise derart, dass die ausgewählten oder erzeugten Fehler (insbesondere für die gewählten Umgebungseigenschaften, Systemzustände und / oder Betriebsmodi des Systems 13) mit erhöhter Wahrscheinlichkeit zu einem sicherheitsrelevanten Fehlverhalten führen.

Für das Lernverfahren und die Fehlerauswahl oder Fehlergenerierung relevante Fehlereigenschaften können dabei z.B. umfassen:
- Stelle im System, wo der oder die Fehler eingebracht werden,
- Art des Fehlers,
- Wert oder Amplitude des Fehlers,
- Fehlerkombinationen.

Die Fehler können dabei beispielsweise als Fehler in der Zeitdomäne realisiert sein, beispielsweise als Signalverzögerungen oder Verzögerungen von Funktionsausführungen oder Änderung von Wiederholraten. Anstelle einer zyklischen Ausführung einer Funktion in einem 10ms-Takt wird die Funktion beispielsweise alle 100ms ausgeführt. Fehler in der Zeitdomäne können auch als unerwartete Unterbrechungen erfolgen, beispielsweise kann eine Funktionsunterbrechung in einem anderen Zeitschlitz erfolgen als geplant oder erwartet.

Auch können die Fehler als Fehler betreffend Werte von Größen oder Parametern realisiert sein, beispielsweise können Signalwerte mit einem bestimmten Faktor kleiner eins oder größer eins multipliziert werden.

Das Einbringen von Fehlern in den beschriebenen Verfahren kann vorzugsweise durch Mutationstestverfahren (mutation testing) erfolgen, bei welchem Teile von einem Softwarecode des Systems 13 durch einen veränderten (mutierten) Softwarecode ausgetauscht werden. Beispielsweise können Vorzeichen, Zahlenwerte oder Verknüpfungen im Code verändert werden.

Die beschriebenen Verfahren können in einer Schleife die Schritte der Fehlerinjektion, Auswertung bzw. Überprüfung des Systemverhaltens, Lernen wiederholt ausführen. Dabei können in jeder Wiederholung für das Auffinden von Fehlverhalten besonders wahrscheinliche oder die dafür wahrscheinlichsten verbliebenen, d.h. noch nicht getesteten, Fehler oder Fehlerkombination gewählt werden.

In besonders vorteilhaften Ausgestaltungen kann abhängig von dem den gelernten Wahrscheinlichkeiten auch ein Testendekriterium bestimmt werden. Beispielsweise kann das Verfahren wiederholt durchgeführt werden, bis festgestellt wird, dass die Wahrscheinlichkeit für das Auffinden weiterer sicherheitskritischer Fehler oder Fehlerkombinationen ausreichend gering ist, insbesondere eine bestimmte Wahrscheinlichkeitsschwelle unterschreitet. Der Testalgorithmus bzw. dessen Lernalgorithmus hat in diesem Fall dann z.B. gelernt, dass unter den betrachteten Betriebsmodi, Systemzuständen oder Umgebungsbedingungen keine nicht bereits eingebrachten Fehler oder Fehlerkombinationen mehr übrig sind, für die mit ausreichender Wahrscheinlichkeit das Nichterfüllen einer betrachteten Sicherheitsanforderung zu erwarten ist. Entsprechend lohnt sich der Aufwand für ein weiteres Testen nicht mehr und der automatische Testlauf wird automatisch beendet.

Die beschriebenen Testverfahren können besonders vorteilhaft für Steuer- oder Regelsysteme elektrischer, hydraulischer oder pneumatischer Maschinen und Aktoren eingesetzt werden. Das können beispielsweise Steuer- oder Regelsystemen von Fahrzeugen oder Robotern sein wie Systeme für elektrische Antriebe (Hochspannung oder Niedrigspannung) oder andere Antriebssysteme oder z.B. Licht-, Kofferraum oder Türsteuerungen.

Ebenso vorteilhaft können die Testverfahren für Fahrerassistenzsysteme in Fahrzeugen sowie zumindest teilautonome Systeme von Fahrzeugen oder Robotern eingesetzt werden. In Steuer- oder Regelsystemen für autonome oder hochautomatisierte Fahrzeuge können solche Verfahren beispielsweise dazu verwendet werden, Robustheitsprobleme zu detektieren, beispielsweise Szenarien von Fehlverhalten, in welchen primäre Systeme oder Backupsysteme einer autonomen Funktion des Fahrzeugs ausfallen.

Vorteilhafterweise liegt das zu testende System dabei als physikalischer Prototyp vor oder als eine Kombination vorhandener physikalischer Teilsysteme und simulierter Teilsysteme. Beispielsweise kann eine Software des zu testenden Systems verfügbar sein und elektrische oder elektronische Teile werden simuliert.

Das zu testende System ist vorzugsweise ein eingebettetes System.

Die zu testenden Sicherheitsanforderungen sind vorzugsweise klar definiert und liegen maschinenlesbar vor. Beispielsweise können sichere und unsichere Systemzustände, bzw. sicheres und unsicheres Systemverhalten definiert sein. Beispielsweise kann für ein Antriebssystem eines Fahrzeugs ein unsicheres Systemverhalten für den Fall definiert sein, dass das Antriebsmoment für länger als 200 ms einen Wert von 50 Nm überschreitet. Ein solches Überschreiten würde dann in der Überprüfung als Fehlverhalten des getesteten Systems festgestellt werden.

Die Tests werden vorzugsweise unter definierten Systemzuständen und Betriebsmodi durchgeführt. Beispielsweise kann ein Test eines Antriebssystems eines Fahrzeugs für einen Betriebszustand "Start des Systems" durchgeführt werden. Sicherheitsanforderungen können vorzugsweise auf für verschiedene Systemzustände und Betriebsmodi unterschiedlich festgelegt sein.

Die Fehler können in den beschriebenen Verfahren auf verschiedene Art und Weise generiert und eingebracht werden. Die Fehler können über ein spezielles Computerprogramm zur Fehlerinjektion eingebracht werden, aber auch mit spezieller Hardware zur Fehlerinjektion.

Da die beschriebenen Testverfahren lernen, das Einbringen welcher Fehler oder Fehlerkombinationen mit welchen Fehlereigenschaften vielversprechend ist, also mit erhöhter Wahrscheinlichkeit zu Fehlverhalten des Systems 13 führt, wird kein fester Satz an einzubringenden Fehlern oder Fehlerkombinationen im Voraus benötigt. Das Verfahren kann mit einem vorbestimmten oder zufällig gewählten Satz an Fehlern oder Fehlerkombinationen zur Fehlerinjektion gestartet werden. Die in späteren Schritten eingebrachten Fehler oder Fehlerkombinationen werden dann aufgrund der gelernten Wahrscheinlichkeiten ausgewählt oder generiert.

Das maschinelle Lernsystem kann verschiedene Lernverfahren bzw. Lernalgorithmen einsetzen.

In einer bevorzugten Ausgestaltung wird ein genetischer Algorithmus verwendet. Basierend auf einer initialen Population von Fehlereigenschaften berechnet der Algorithmus eine Fitnessfunktion. Abhängig von der Fitnessfunktion sucht der Algorithmus vielversprechende Fehler aus der Elterngeneration (parents) oder generiert vielversprechende Fehler aus der Nachwuchsgeneration (offsprings). Dieses Verfahren kann wiederholt werden, bis keine Verbesserung mehr für mehrere Generationen beobachtbar ist.

Beispielsweise kann die initiale Population für ein Antriebssystem gegeben sein durch Versorgungsspannung 43 V, Momentenanfrage bei 72 Nm, Betriebsmodus "Normalbetrieb", Fehlerinjektion beim SPI-Befehl 21 etc. und die Fitnessfunktion kann definiert sein als Anstieg eines unerwarteten Moments.

In einer weiteren bevorzugten Ausgestaltung kann das Maschinenlernsystem mit einem oder mehreren neuronalen Netzen realisiert sein, welche lernen, welche Fehler oder Fehlerkombinationen bzw. welche Fehlereigenschaften oder Kombinationen von Fehlereigenschaften mit welcher Wahrscheinlichkeit zu einem Fehlverhalten des Systems führen.

## Patentansprüche

1. Computerimplementiertes Verfahren zum Testen eines Systems (13), insbesondere eines eingebetteten Systems, **gekennzeichnet durch** die Schritte:
- erste Fehler werden in das System (13) eingebracht,
- ein Systemverhalten des Systems nach Einbringen der ersten Fehler wird beobachtet und daraufhin überprüft, ob ein erstes Fehlverhalten des Systems (13) auftritt,
- von einem maschinellen Lernsystem wird abhängig von den ersten Fehlern und abhängig von dem Auftreten des ersten Fehlverhaltens eine Wahrscheinlichkeit für ein Auftreten eines Fehlverhaltens des Systems (13) bei einem Einbringen von Fehlern in das System (13) abhängig von Eigenschaften der eingebrachten Fehler gelernt,
- abhängig von der gelernten Wahrscheinlichkeit werden zweite Fehler in das System (13) eingebracht und
- das Systemverhalten des Systems (13) nach Einbringen der zweiten Fehler wird beobachtet und daraufhin überprüft, ob ein zweites Fehlverhalten auftritt.

2. Verfahren nach Anspruch 1, **dadurch gekennzeichnet, dass** die Fehler einen zeitlichen Ablauf im System (13), insbesondere einen Zeitpunkt oder eine Wiederholrate für ein Signal, für einen Funktionsaufruf oder für eine Funktionsunterbrechung, betreffen oder dass die Fehler einen Wert im System, insbesondere eines Signals oder eines Parameters, betreffen.

3. Verfahren nach einem der vorangegangenen Ansprüche, **dadurch gekennzeichnet, dass** die Eigenschaften der eingebrachten Fehler eine Stelle im System, an der die Fehler eingebracht werden, oder eine Art der eingebrachten Fehler, oder einen Wert oder eine Amplitude der eingebrachten Fehler oder eine Kombination der eingebrachten Fehler umfassen.

4. Verfahren nach einem der vorangegangenen Ansprüche, **dadurch gekennzeichnet, dass** das maschinelle Lernsystem die Wahrscheinlichkeit abhängig von einer Umgebungsbedingung, einem Systemzustand oder einem Betriebsmodus des Systems (13) lernt.

5. Verfahren nach einem der vorangegangenen Ansprüche, **dadurch gekennzeichnet, dass** die Fehler mittels einer Software zur Fehlerinjektion oder mittels einer Hardware zur Fehlerinjektion in das System (13) eingebracht werden.

6. Verfahren nach einem der vorangegangenen Ansprüche, **dadurch gekennzeichnet, dass** die Fehler in das System (13) über eine Veränderung oder einen Austausch eines Teils eines Softwarecodes des Systems (13) eingebracht werden.

7. Verfahren nach einem der vorangegangenen Ansprüche, **dadurch gekennzeichnet, dass** die Überprüfung des Systemverhaltens anhand mindestens einer vorbestimmten, maschinenlesbaren Sicherheitsanforderung erfolgt und das Feststellen des Fehlverhaltens erfolgt, wenn das Systemverhalten die mindestens eine Sicherheitsanforderung nicht erfüllt.

8. Verfahren nach einem der vorangegangenen Ansprüche, **dadurch gekennzeichnet, dass** das System (13) mindestens teilweise ein physikalischer Prototyp ist, mindestens teilweise als Hardware-in-the-Loop realisiert ist, mindestens teilweise als Software-in-the-Loop realisiert ist und / oder mindestens teilweise als Prozessor-in-the-Loop realisiert ist.

9. Verfahren nach einem der vorangegangenen Ansprüche, **dadurch gekennzeichnet, dass** eine Umgebung (14) des Systems (13) für das Testen simuliert wird.

10. Verfahren nach einem der vorangegangenen Ansprüche, **dadurch gekennzeichnet, dass** das System (13) Hardwarekomponenten und Softwarekomponenten aufweist.

11. Verfahren nach einem der vorangegangenen Ansprüche, **dadurch gekennzeichnet, dass** das System (13) ein Steuersystem oder ein Regelsystem, insbesondere für eine elektrische, hydraulische oder pneumatische Vorrichtung, Maschine oder einen Aktor einer solchen Vorrichtung ist.

12. Verfahren nach einem der vorangegangenen Ansprüche, **dadurch gekennzeichnet, dass** das System (13) zur Regelung oder Steuerung einer Funktion eines Fahrzeugs oder eines Roboters eingerichtet ist.

13. Verfahren nach einem der vorangegangenen Ansprüche, **dadurch gekennzeichnet, dass** das System (13) ein Fahrerassistenzsystem in einem Fahrzeug oder ein Steuer- oder Regelsystem ist, welches eine Fahrfunktion in einem hochautomatisierten oder autonomen Fahrzeug steuert oder regelt.

14. Verfahren nach einem der vorangegangenen Ansprüche, **dadurch gekennzeichnet, dass** das maschinelle Lernsystem einen evolutionären Algorithmus, einen genetischen Algorithmus oder ein neuronales Netz umfasst.

15. Verfahren nach einem der vorangegangenen Ansprüche, **dadurch gekennzeichnet, dass** in einer Schleife wiederholt weitere Fehler abhängig von der gelernten Wahrscheinlichkeit eingebracht werden und abhängig von den eingebrachten weiteren Fehlern und abhängig von für die eingebrachten weiteren Fehler festgestelltem Fehlverhalten ein weiteres Lernen des maschinellen Lernsystems erfolgt.

16. Verfahren nach Anspruch 15, **dadurch gekennzeichnet, dass** abhängig von dem maschinellen Lernsystem oder von der gelernten Wahrscheinlichkeit ein Testendekriterium bestimmt wird oder das Verfahrens beendet wird.

17. Verfahren nach Anspruch 16, **dadurch gekennzeichnet, dass** das Verfahren beendet wird, wenn die Wahrscheinlichkeit für das Auftreten weiteren Fehlverhaltens durch das Einbringen weitere Fehler eine bestimmte Schwelle nicht überschreitet.

18. Verfahren nach einem der vorangegangenen Ansprüche, **dadurch gekennzeichnet, dass** das System (13) abhängig von Ergebnissen des Tests angepasst wird, insbesondere, dass ein Übergang des Systems (13) in einen sicheren Zustand für festgestellte Fehlverhalten sichergestellt wird.

19. Testsystem (11, 12), welches dazu eingerichtet ist, ein Verfahren nach einem der vorangegangenen Ansprüche durchzuführen.

20. Computerprogramm, welches eingerichtet ist, ein Verfahren nach einem der Ansprüche 1 bis 18 durchzuführen.

21. Maschinenlesbares Speichermedium mit einem Computerprogramm nach Anspruch 20.
